# EUROPEAN PATENT APPLICATION

(11) **EP 3 459 607 A1**
(43) Date of publication of application: **27.03.2019**
(21) Application number: 17799207.0
(22) Date of filing: 09.05.2017
(51) Int. Cl.: A63H 11/00, A63H 3/33, A63H 5/00, A63H 13/04, A63H 17/00, A63H 30/04, B25J 5/00, B25J 13/08

(54) **ROBOT**

(30) Priority: 19.05.2016 JP 2016100222
(71) Applicant: Panasonic Intellectual Property Management Co., Ltd., Osaka-shi, Osaka 540-6207 (JP)
(72) Inventor: KOU Shiki, Osaka-shi, Osaka 540-6207 (JP); MIYAZAKI Ryouta, Osaka-shi, Osaka 540-6207 (JP); ISHII Masahiro, Osaka-shi, Osaka 540-6207 (JP); OGAWA Kento, Osaka-shi, Osaka 540-6207 (JP); KUNITAKE Yuji, Osaka-shi, Osaka 540-6207 (JP); HIGUCHI Seiya, Osaka-shi, Osaka 540-6207 (JP)
(74) Representative: Grünecker Patent- und Rechtsanwälte PartG mbB
(86) International application number: PCT/JP2017/017438
(87) International publication number: WO 2017/199782

(57) **Abstract**

In a case where recognition results of an image of an object to be recognized by an external server are necessary, a robot causes a set of driving wheels to rotate in opposite directions from each other to rotate a spherical casing, and upon receiving recognition results of the image of the object to be recognized from the external server, stops rotation of the spherical casing with a display unit facing toward the user.

## Description

### Technical Field

The present disclosure relates to a robot that dialogs with a user.

### Background Art

Various types of robots have been proposed heretofore.

PTL 1 discloses a communication robot. The robot in PTL 1 determines, based on a degree of reliability that a speech recognition unit has calculated regarding input speech, whether or not to perform a reply-incapable action indicating that a reply cannot be given as to the speech that has been input. In a case of determining to perform the reply-incapable action, the reply-incapable action, which is to cock the head or the like for example, is selected from predetermined response actions that the communication robot is capable of. This prevents thinking out loud, unknown words, and sound other than speech, from being recognized as speech, and erroneously speaking (e.g., paragraphs [0004] through [0007], [0113]).

PTL 2 relates to a robot control device. The robot in PTL 2 recognizes speech input from a microphone at a speech recognition unit, and if the speech recognition fails or the reliability is low, performs predetermined actions such as cocking its head, cupping its hand to its ear, and so forth, for example (e.g., paragraphs [0003] through [0005]).

### Citation List

### Patent Literature

PTL 1: Japanese Unexamined Patent Application Publication No. 2011-227237
PTL 2: Japanese Unexamined Patent Application Publication No. 2002-116792

### Summary of Invention

### Technical Problem

Further improvement has been necessary in the above-described conventional technology.

### Solution to Problem

In order to solve the above problem, a robot according to an aspect of the present disclosure includes:
a spherical casing;
a frame that is disposed on an inner side portion of the casing;
an input device that is provided to the frame;
an output device that is provided to the frame;
a communication circuit that is provided to the frame and connected to an external network;
a set of driving wheels that are provided to the frame, the driving wheels coming into contact with an inner circumferential face of the casing and rotating the casing; and
a control circuit that
   in a case of responding based on predetermined processing that requires a predetermined amount of time or more as to an input instruction by a user input via the input device, causes the set of driving wheels to rotate in opposite directions from each other to rotate the spherical casing, and
   when outputting a response based on the predetermined processing via the output device, stops rotation of the spherical casing with a direction of advancing by the set of wheels facing toward the user.

### Advantageous Effects of Invention

According to the above aspect, further improvement has been realized.

### Brief Description of Drawings

Fig. 1 is an external perspective view of a robot according to a first embodiment of the present disclosure.
Fig. 2 is an internal perspective view of the robot according to the first embodiment of the present disclosure.
Fig. 3 is an internal side view of the robot according to the first embodiment of the present disclosure, as viewed from A in Fig. 2.
Fig. 4 is a side view of a forward advancing action of the robot according to the first embodiment of the present disclosure, as viewed from A in Fig. 2.
Fig. 5 is a plan view representing rotation actions of the robot according to the first embodiment of the present disclosure, as viewed from B in Fig. 2.
Fig. 6 is a perspective view illustrating rotating actions of the robot according to the first embodiment of the present disclosure.
Fig. 7 is a diagram illustrating a driving mechanism of a counterweight in the side view in Fig. 3.
Fig. 8A is a perspective view illustrating the actions of the driving mechanism of the counterweight when driving the counterweight in a predetermined linear direction.
Fig. 8B is a side view illustrating the actions of the driving mechanism of the counterweight when driving the counterweight in a predetermined linear direction.
Fig. 8C is a side view illustrating a state of the counterweight being reciprocally moved in a predetermined linear direction in the side view in Fig. 3.
Fig. 9A is a perspective view illustrating actions of the driving mechanism of the counterweight when rotating a swing arm.
Fig. 9B is a side view illustrating actions of the driving mechanism of the counterweight when rotating the swing arm.
Fig. 9C is a plan view illustrating a state of the swing arm of the robot according to the first embodiment of the present disclosure rotating, as viewed from B in Fig. 2.
Fig. 10 is a side view illustrating the attitude of the robot when the counterweight is situated toward the front as viewed from A in Fig. 2.
Fig. 11 is a side view illustrating the attitude of the robot when the counterweight is situated toward the rear as viewed from A in Fig. 2.
Fig. 12 is a frontal view illustrating the attitude of the robot when the counterweight is situated toward the right as viewed from C in Fig. 2.
Fig. 13 is a frontal view illustrating the attitude of the robot when the counterweight is situated toward the left as viewed from C in Fig. 2.
Fig. 14 is a diagram illustrating an example of a usage case of the robot according to the first embodiment of the present disclosure.
Fig. 15 is a diagram illustrating an example of the overall configuration of a robot system in which the robot according to the first embodiment of the present disclosure is applied.
Fig. 16 is a block diagram illustrating the robot according to the first embodiment of the present disclosure, and a cloud server to which the robot is connected.
Fig. 17 is a flowchart illustrating image recognition processing by the robot according to the first embodiment of the present disclosure.
Fig. 18 is a flowchart illustrating details of image recognition processing shown in S1709 of Fig. 17 in the first embodiment of the present disclosure.
Fig. 19 is a flowchart illustrating details of progress expression processing shown in S1707 of Fig. 17 in the first embodiment of the present disclosure.
Fig. 20 is a flowchart illustrating details of image recognition processing shown in S1709 of Fig. 17 in a second embodiment of the present disclosure.
Fig. 21 is a diagram illustrating the relationship between rotation speed of a robot 1 and a stage indicated by a stage No. of image recognition processing.
Fig. 22 is a flowchart illustrating details of progress expression processing shown in S1707 of Fig. 17 in the second embodiment of the present disclosure.

### Description of Embodiments

### (Circumstances Leading to Invention of Aspect According to Present Disclosure)

First, a point of observation that led to an aspect according to the present disclosure will be described.

PTL 1 discloses a bipedal ambulatory human-type robot. This robot has a head, arms, legs, torso, and so forth. Accordingly, the robot can response to user speech by moving the head, arms, legs, and torso, based on recognition results of the input speech.

PTL 2 relates to a dog-type pet robot. The pet robot has a head, four legs, a tail, and so forth, provided to a body portion. Accordingly, the pet robot can response to user speech by moving the head, four legs, and tail, based on recognition results of input speech.

Thus, each type of robot has function of responding to queries by a user. In a case where speech recognition is used to respond to a query from a user as in the above-described PTLs 1 and 2, there is a need to set the time interval from when the user speaks to when the robot responds short enough, so the user will not think that the conversation between the user and the robot has broken off. Accordingly, it is conceivable that the robots are designed to respond within a relatively short time from the user speaking, regardless of whether the degree of reliability of the speech recognition results is high or low.

On the other hand, there are cases where the time interval from when the user speaks to when the robot responds is relatively long. As an example, a case is conceivable where the robot is queried regarding what an object that the user is holding is, and the robot responds using image recognition functions.

In a case of the robot responding to the query from the user using image recognition functions, an arrangement is conceivable where the object is imaged, and thereafter the imaged image is transmitted to a cloud server having image recognition functions for example, the image is recognized at the cloud server, the recognition results of the recognition are received from the cloud server, and a reply is made regarding what the object is, based on the recognition results that have been received. In this case, if the time taken from the user querying the robot until the robot replies to the user is around 15 seconds for example, the robot will make the user wait for the reply.

In a case where time during which the robot cannot respond to the query from the user continues for a predetermined number of seconds or longer in this way, there is a problem in that the user cannot judge whether the robot is currently performing processing, or does not move due to a malfunction, from the external appearance of the robot alone.

Also, in a case of assuming a spherical robot that does not have hands, feet, a head, or the like, unlike the above-described PTLs 1 and 2, the user cannot be notified that the robot is currently performing processing by moving hands and feet or cocking the head. Also, an arrangement where a display indicating that processing is currently being performed is made on the surface of the spherical robot is conceivable, but a display to this effect on the surface of the spherical robot that does not have hands, feet, head, and so forth, would be unnatural for the face of the robot, since a display that differs from facial components is displayed on the face of the spherical robot.

Thus, there is the problem that there are restrictions in communicating to the user the progress state of internal processing to the user, in a case of a spherical robot that does not have hands, feet, head, and so forth.

Based on the above examination, the present inventor has reached the following aspects according to the present disclosure.

A robot according to an aspect of the present disclosure includes:
a spherical casing;
a frame that is disposed on an inner side portion of the casing;
an input device that is provided to the frame;
an output device that is provided to the frame;
a communication circuit that is provided to the frame and connected to an external network;
a set of driving wheels that are provided to the frame, the driving wheels coming into contact with an inner circumferential face of the casing and rotating the casing; and
a control circuit that
   in a case of responding based on predetermined processing that requires a predetermined amount of time or more as to an input instruction by a user input via the input device, causes the set of driving wheels to rotate in opposite directions from each other to rotate the spherical casing, and
   when outputting a response based on the predetermined processing via the output device, stops rotation of the spherical casing with a direction of advancing by the set of wheels facing toward the user.

According to this aspect, in a case of responding based on predetermined processing that requires a predetermined amount of time or more as to an input instruction by a user input via the input device, the set of driving wheels is caused to rotate in opposite directions from each other to rotate the spherical casing. Accordingly, the shape of the spherical robot can be used to notify the user that the robot is currently performing processing by rotation of the casing, during conversation with the user.

Also, in a case of having received the recognition results, if the rotation of the spherical casing is simply stopped, the robot may stop in a state where the front, which is the direction of advancing of the robot, is not facing the user.

According to this aspect, when outputting a response based on the predetermined processing via the output device, rotation of the spherical casing is stopped with the direction of advancing by the set of wheels facing toward the user. Accordingly, a response based on the results of the predetermined processing can be output toward the user. Thus, trouble in which a response based on the results of the predetermined processing is output in a state where the front of the robot is not facing the user can be prevented.

### (Embodiments)

Embodiments of the present invention will be described below with reference to the drawings. Note that in the drawings, the same components are denoted by the same symbols.

### (First Embodiment)

### (Overall Configuration)

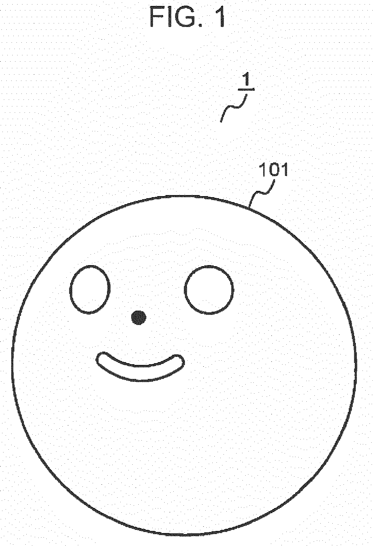

Fig. 1 is an external perspective view of a robot 1 according to a first embodiment of the present disclosure. The robot 1 has a spherical casing 101, as illustrated in Fig. 1. The casing 101 is made of a transparent material or translucent material, for example.

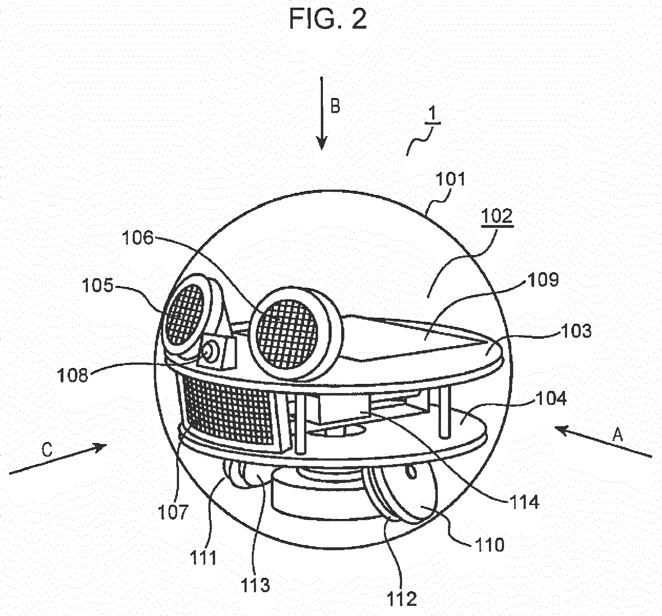

Fig. 2 is an internal perspective view of the robot according to the first embodiment of the present disclosure.

In Fig. 2, a frame 102 is disposed on the inner side portion of the casing 101. The frame 102 has a first rotating plate 103 and a second rotating plate 104. The first rotating plate 103 is positioned above the second rotating plate 104.

A first display unit 105 and a second display unit 106 are provided on the upper face of the first rotating plate 103, as illustrated in Fig. 2. A third display unit 107 is provided on the upper face of the second rotating plate 104. The first display unit 105, second display unit 106, and third display unit 107 are configured of multiple light-emitting diodes, for example. The first display unit 105, second display unit 106, and third display unit 107 display the display information of emotions of the robot. Specifically, the first display unit 105, second display unit 106, and third display unit 107 display a part of the face of the robot 1 such as eyes and a mouth, for example, as illustrated in Fig. 1, by individually controlling on/off of the multiple light-emitting diodes. In the example in Fig. 1, the first display unit 105 displays an image for the left eye, the second display unit 106 displays an image for the right eye, and the third display unit 107 displays an image for the mouth. The images of the left eye, right eye, and mouth pass through the casing 101 made of the transparent or translucent material, and are externally emitted.

A camera 108 is provided on the upper face of the first rotating plate 103, as illustrated in Fig. 2. The camera 108 acquires video of the surrounding environment of the robot 1. The camera 108 makes up part of the face of the robot 1, the nose for example, as illustrated in Fig. 1. Accordingly, the optical axis of the camera 108 faces forward of the robot 1. Thus, the camera 108 can image objects to be recognized that are presented in front.

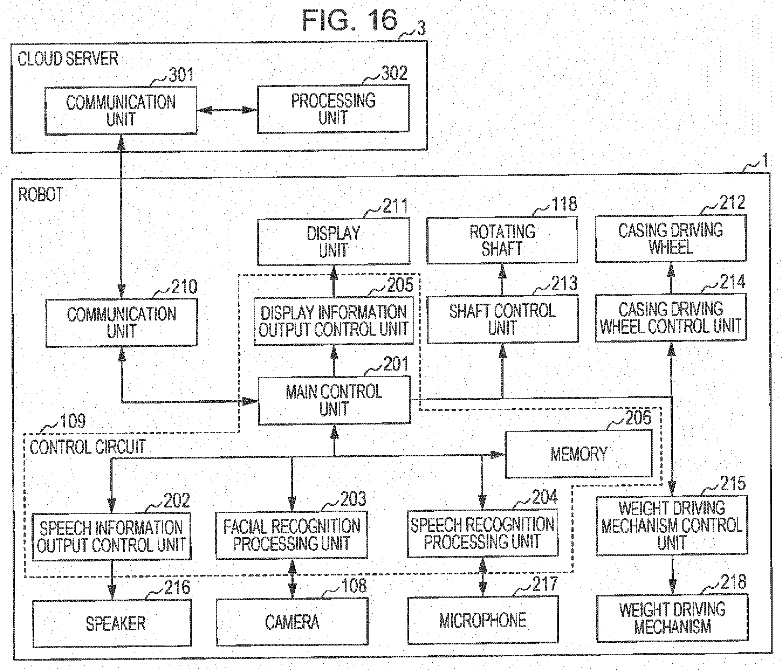

A control circuit 109 is provided to the upper face of the first rotating plate 103, as illustrated in Fig. 2. The control circuit 109 controls various types of actions of the robot 1. Details of the control circuit 109 will be described later with reference to Fig. 16.

A first driving wheel 110 and a second driving wheel 111 are each provided on the lower face of the second rotating plate 104, and come into contact with the inner circumferential face of the casing 101. The first driving wheel 110 has a first motor 112 that drives the first driving wheel 110. In the same way, the second driving wheel 111 has a second motor 113 that drives the second driving wheel 111. That is to say, the first driving wheel 110 and second driving wheel 111 are driven by individual motors that are each independent. The actions of the robot 1 by driving the first driving wheel 110 and second driving wheel 111 will be described in detail later. The first driving wheel 110 and second driving wheel 111 make up a set of driving wheels,

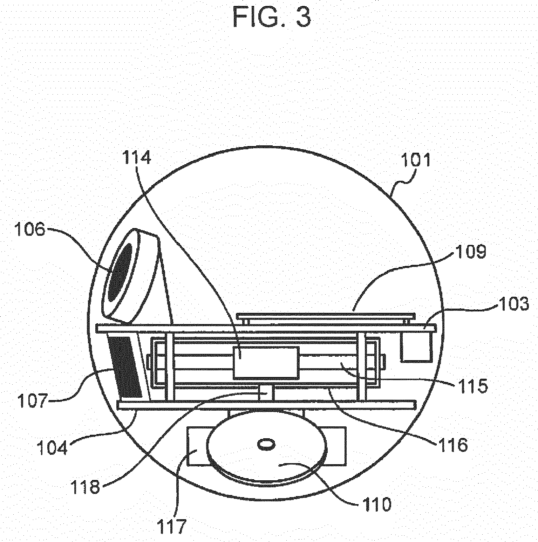

Fig. 3 is an internal side view of the robot 1 according to the first embodiment of the present disclosure, as viewed from A in Fig. 2. A counterweight 114 (an example of a weight) is disposed between the first rotating plate 103 and second rotating plate 104 in Fig. 3. The counterweight 114 is positioned somewhat below the center of the casing 101. Accordingly, the center of gravity of the robot 1 is below the center of the casing 101. Thus, the actions of the robot 1 can be stabilized.

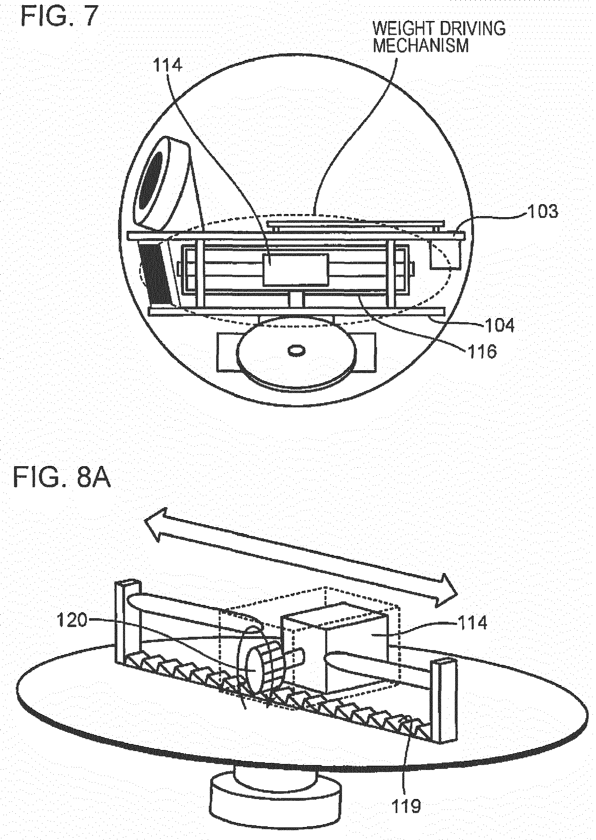

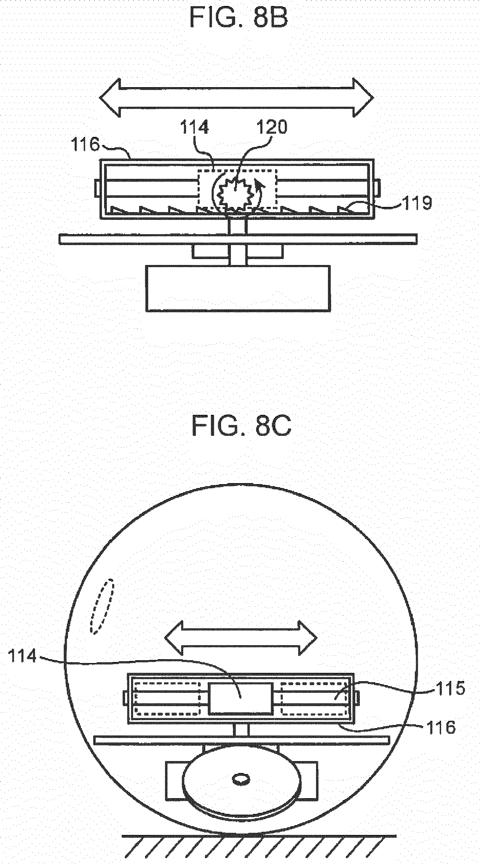

As illustrated in Fig. 3, the robot 1 has, as a mechanism for driving the counterweight 114, a guide shaft 115 that regulates the direction in which the counterweight 114 moves, a swing arm 116 that regulates the position of the counterweight 114 in the rotational direction, a rotating motor 117 that rotates the swing arm 116, a rotating shaft 118 that connects between the swing arm 116 and rotating motor 117, a belt 119 (Fig. 8A and Fig. 8B) used to drive the counterweight 114, a motor pulley 120 (Fig. 8A and Fig. 8B) in contact with the belt 119, and a weight driving motor, omitted from illustration, that rotates the motor pulley 120. Note that in the present embodiment, the driving motor is built into the counterweight 114. Details of actions of the robot 1 by driving of the counterweight 114 will be described later.

The rotating shaft 118 extends in a perpendicular direction as to the driving axes of the first driving wheel 110 and the second driving wheel 111. The rotating shaft 118 corresponds to an example of a shaft provided to the frame 102. In frontal view, the first driving wheel 110 and second driving wheel 111 are attached so that there is a distance toward the ground. In this case, the driving axes of the first driving wheel 110 and second driving wheel 111 are imaginary axial lines connecting the centers of the first driving wheel 110 and second driving wheel 111 with each other, for example. If the first driving wheel 110 and second driving wheel 111 are attached in parallel in frontal view, the actual driving axes are the driving axes of the first driving wheel 110 and second driving wheel 111.

The robot 1 further has a power source that is omitted from illustration, and a microphone 217 (Fig. 16). The robot 1 is charged by a charger that is omitted from illustration. The microphone 217 acquires sound in the surrounding environment of the robot 1.

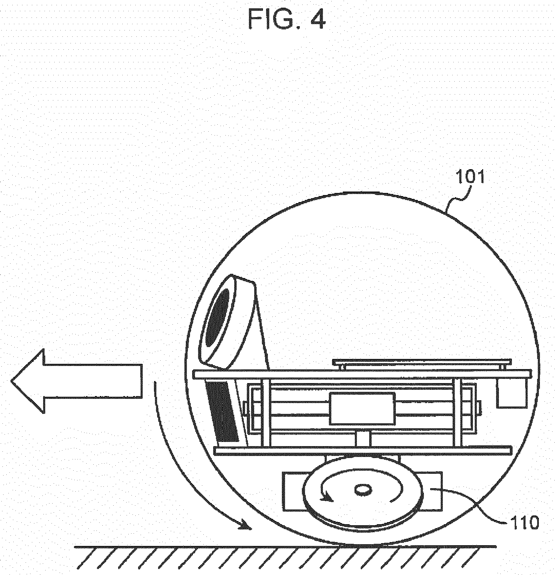

Next, actions of the robot 1 using the first driving wheel 110 and second driving wheel 111 will be described with reference to Fig. 4 through Fig. 6.

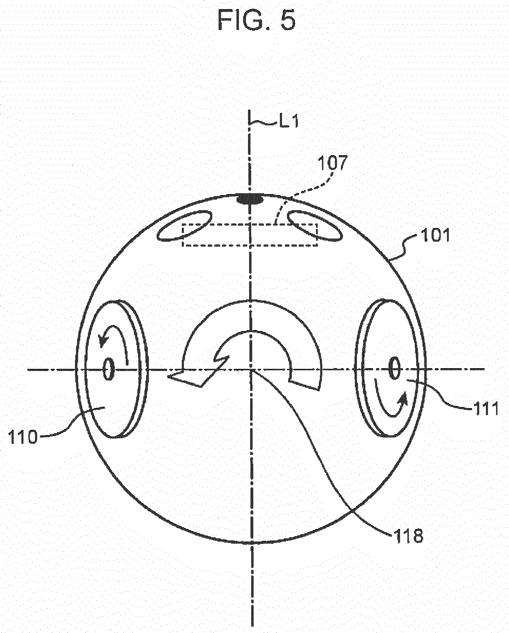

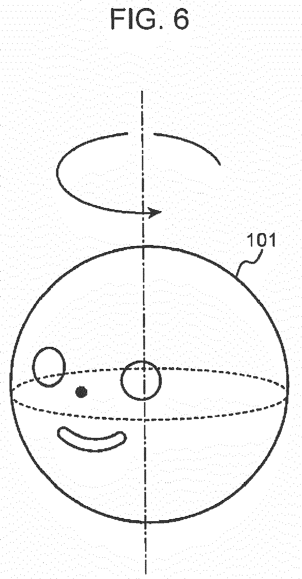

Fig. 4 is a side view representing a straight advancing action of the robot according to the first embodiment of the present disclosure, as viewed from A in Fig. 2. Fig. 5 is a plan view representing a rotating action of the robot according to the first embodiment of the present disclosure, as viewed from B in Fig. 2. Fig. 6 is a perspective view illustrating a rotating action of the robot according to the first embodiment of the present disclosure.

Rotating the first driving wheel 110 and second driving wheel 111 in the forward direction rotates the casing 101 in the forward direction by the power thereof, as illustrated in Fig. 4. Thus, the robot 1 advances forward. Conversely, rotating the first driving wheel 110 and second driving wheel 111 in the reverse direction causes the robot 1 to move backwards.

Rotating the first driving wheel 110 and second driving wheel 111 in opposite directions from each other causes the casing 101 to perform rotating actions on a vertical axis passing through the center thereof by the power thereof, as illustrated in Fig. 5 and Fig. 6. That is to say, the robot 1 rotates to the left or to the right in that spot. The robot 1 moves by performing such advancing, reversing and rotating actions.

Next, basic actions of the robot 1 using the counterweight 114 will be described with reference to Fig. 7 through Fig. 9C.

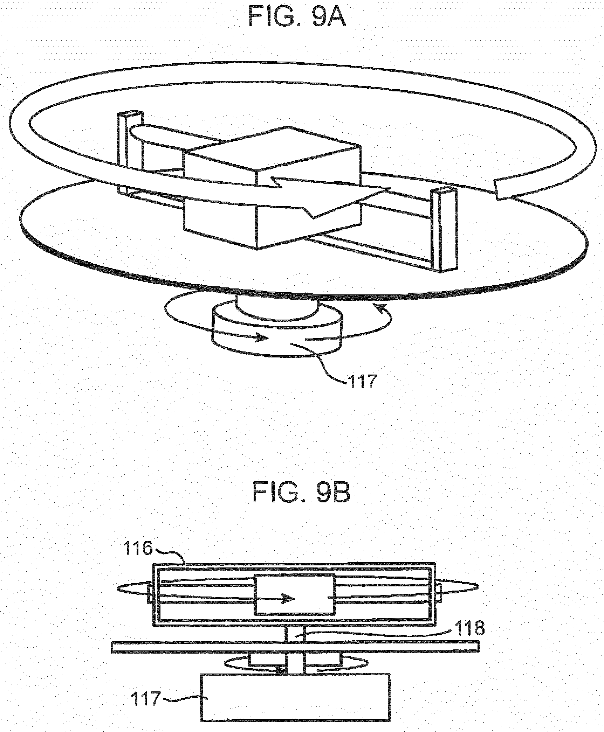

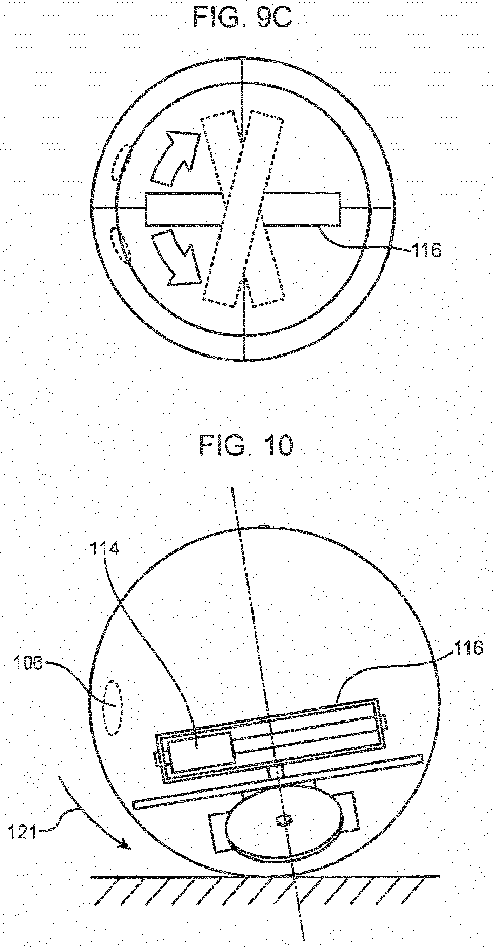

Fig. 7 is a diagram illustrating a weight driving mechanism in the side view in Fig. 3. Fig. 8A is a perspective view illustrating the actions of the driving mechanism of the counterweight 114 when driving the counterweight 114 in a predetermined linear direction. Fig. 8B is a side view illustrating the actions of the driving mechanism of the counterweight 114 when driving the counterweight 114 in a predetermined linear direction. Fig. 8C is a side view illustrating a state of the counterweight 114 being reciprocally moved in a predetermined linear direction in the side view in Fig. 3. Fig. 9A is a perspective view illustrating actions of the driving mechanism of the counterweight 114 when rotating a swing arm 116. Fig. 9B is a side view illustrating actions of the weight driving mechanism when rotating the swing arm 116. Fig. 9C is a plan view illustrating a rotating state of the swing arm 116 of the robot 1 according to the first embodiment of the present disclosure, as viewed from B in Fig. 2.

The middle position of the swing arm 116 is the default position of the counterweight 114, for example, as illustrated in Fig. 7. When the counterweight 114 is positioned at the middle of the swing arm 116, the first rotating plate 103 and second rotating plate 104 are generally parallel with the running surface, and the eyes, nose, and mouth, for example, making up the face of the robot 1, are in a state facing in a default direction.

A weight driving motor, omitted from illustration, built into the counterweight 114, rotates the motor pulley 120 linked to the weight driving motor, as illustrated in Fig. 8A and Fig. 8B. The counterweight 114 moves within the swing arm 116 by the rotated motor pulley 120 turning upon the belt 119. Changing the rotation direction of the motor pulley 120, i.e., the driving direction of the weight driving motor, reciprocally moves the counterweight 114 in a linear direction within the swing arm 116.

As illustrated in Fig. 8C, the counterweight 114 reciprocally moves in the linear direction within the swing arm 116, following the guide shaft 115.

The rotating motor 117 rotates the rotating shaft 118, thereby rotating the swing arm 116 connected to the rotating shaft 118 (Fig. 3), as illustrated in Fig. 9A and Fig. 9B.

The swing arm 116 can be rotated in either direction of clockwise and counterclockwise, as illustrated in Fig. 9C.

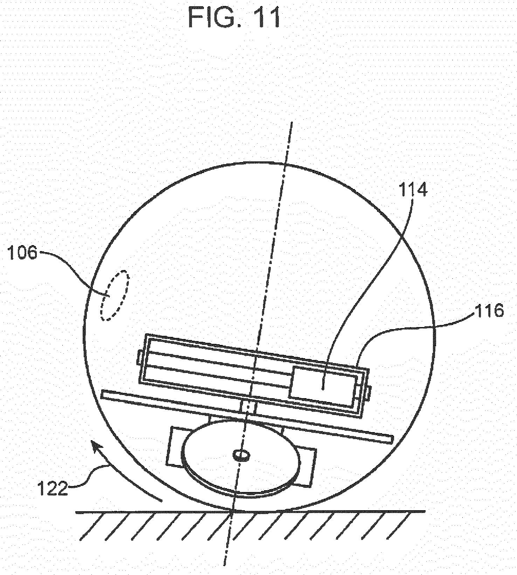

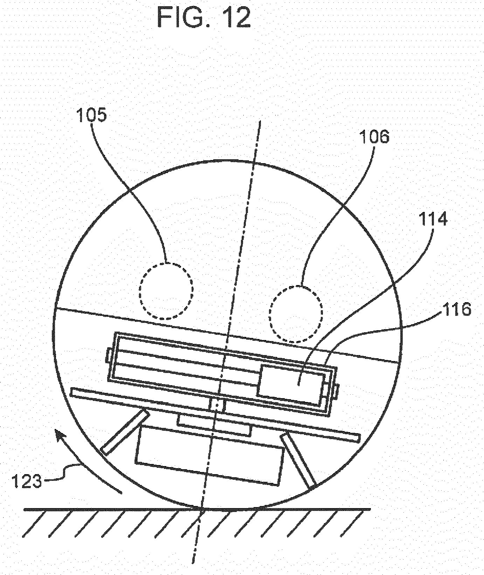

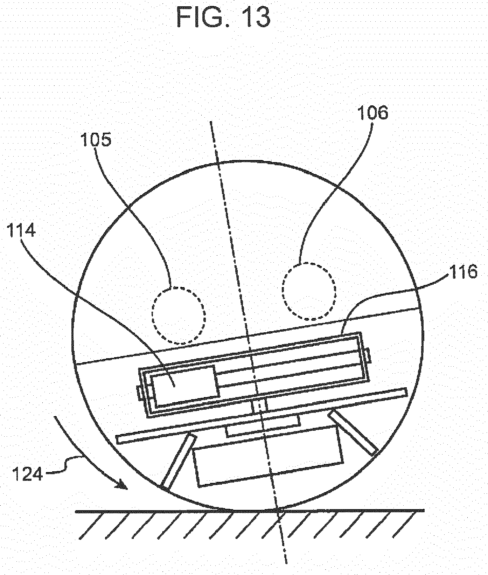

Details of actions of the robot 1 using the counterweight 114 will be further described with reference to Fig. 10 through Fig. 13. Fig. 10 is a side view illustrating the attitude of the robot 1 when the counterweight 114 is situated toward the front as viewed from A in Fig. 2. Fig. 11 is a side view illustrating the attitude of the robot 1 when the counterweight 114 is situated toward the rear as viewed from A in Fig. 2. Fig. 12 is a frontal view illustrating the attitude of the robot 1 when the counterweight 114 is situated toward the right as viewed from C in Fig. 2. Fig. 13 is a frontal view illustrating the attitude of the robot 1 when the counterweight 114 is situated toward the left as viewed from C in Fig. 2.

As illustrated in Fig. 10, when the counterweight 114 is moved from the default position to one end of the swing arm 116 (left end in Fig. 10), i.e., toward the front, in a state where the swing arm 116 is perpendicular to the front of the robot 1, the robot 1 tilts forward, as indicated by arrow 121. Also, as illustrated in Fig. 11, when the counterweight 114 is moved from the default position to the other end of the swing arm 116 (right end in Fig. 11), i.e., toward the rear, in a state where the swing arm 116 is perpendicular to the front of the robot 1, the robot 1 tilts backward, as indicated by arrow 122. Accordingly, reciprocally moving the counterweight 114 from one end to the other end of the swing arm 116 in a state where the swing arm 116 is perpendicular to the front of the robot 1, the robot 1 performs reciprocal actions of tilting forwards as indicated by arrow 121 and backwards as indicated by arrow 122. That is to say, the robot 1 rotates in the up and down direction within a predetermined angle.

As described above, the first display unit 105, second display unit 106, and third display unit 107 represent part of the face of the robot 1, such as the eyes and mouth, for example. Accordingly, reciprocally moving the robot 1 so as to tilt on the forward and backward directions using the counterweight 114 can express a state where the robot 1 is winded or a sleepy state, for example. By performing this control in a case where the remaining charge of the power source has reached a predetermined value or lower, the robot 1 can notify the user that the remaining charge of the power source is low in a natural manner, without displaying information relating to remaining charge that is unrelated to the face, using the first display unit 105, second display unit 106, and third display unit 107.

As illustrated in Fig. 12, when the counterweight 114 is moved from the default position to one end of the swing arm 116 (right end in Fig. 12), i.e., toward the right, in a state where the swing arm 116 is parallel to the front of the robot 1, the robot 1 tilts to the right, as indicated by arrow 123. Also, as illustrated in Fig. 13, when the counterweight 114 is moved from the default position to the other end of the swing arm 116 (left end in Fig. 13), i.e., toward the left, in a state where the swing arm 116 is parallel to the front of the robot 1, the robot 1 tilts to the left, as indicated by arrow 124. Accordingly, reciprocally moving the counterweight 114 from one end to the other end of the swing arm 116 in a state where the swing arm 116 is parallel to the front of the robot 1, the robot 1 performs reciprocal actions of tilting to the right as indicated by arrow 123 and to the left as indicated by arrow 124. That is to say, the robot 1 rotates in the left and right direction within a predetermined angle.

As described above, the first display unit 105, second display unit 106, and third display unit 107 represent part of the face of the robot 1 such as eyes and mouth, for example. Accordingly, causing the robot 1 to perform reciprocal movement tilting to the left and right using the counterweight 114 can express a state where the robot 1 is in a good mood, or that the robot 1 is in thought, for example.

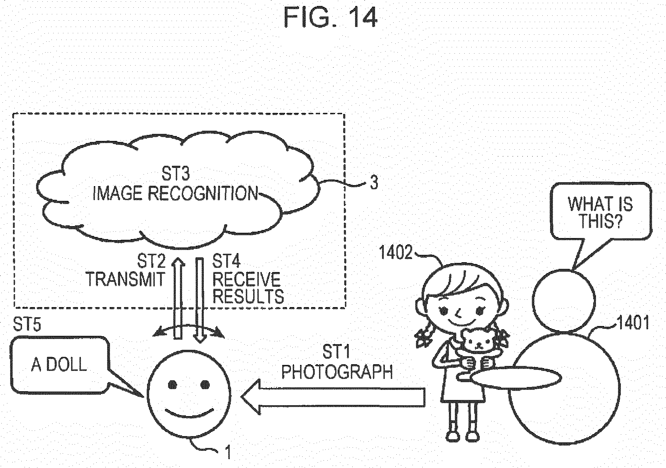

Fig. 14 is a diagram illustrating an example of a usage case of the robot 1 according to the first embodiment of the present disclosure. As illustrated in Fig. 14, the robot 1 is connected to a cloud server 3. A user 1401 holds out a girl doll 1402 in front of the robot 1, and says, "What is this?" The robot 1 then judges that the user 1401 has made a recognition request for an object to be recognized, based on the content of the speech of the user 1401, and takes an image of the object to be recognized (step ST1).

Next, the robot 1 transmits the imaged image of the object to be recognized to the cloud server 3 (step ST2). Next, the cloud server 3 performs image recognition processing, and recognizes that the object to be recognized included in the image that has been transmitted is the doll 1402 (step ST3). Next, the cloud server 3 transmits the image recognition results to the robot 1, and the robot 1 receives the image recognition results (step ST4). Next, the image recognition results are "a doll", so the robot 1 utters "a doll" (step ST5).

Such image recognition processing takes around 15 seconds to 30 seconds from the image being transmitted till the recognition results being received, so if the robot 1 performs no actions during that time, the user 1401 will become uneasy whether the robot 1 has actually accepted the image recognition processing request, or whether the robot 1 is malfunctioning. Accordingly, the following arrangement is employed in the present disclosure.

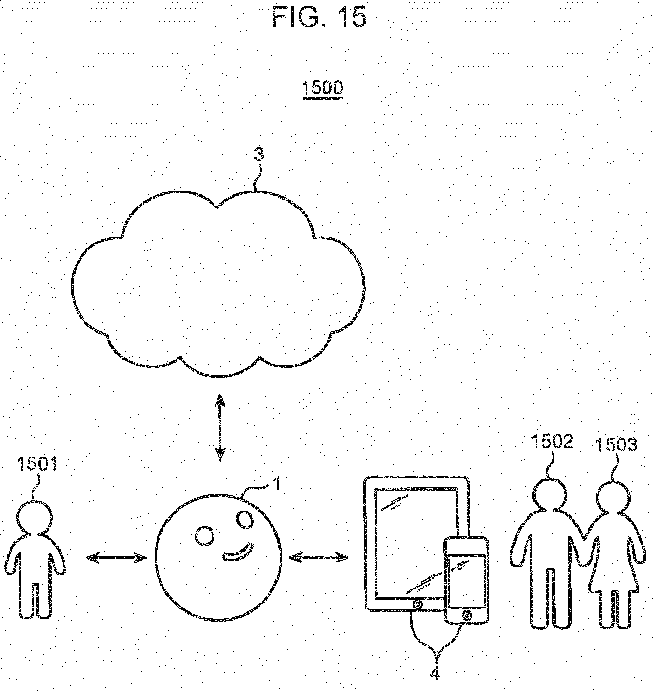

Fig. 15 is a diagram illustrating an example of the overall configuration of a robot system 1500 in which the robot 1 according to the first embodiment of the present disclosure is applied. The robot system 1500 includes the cloud server 3, a mobile terminal 4, and the robot 1. The robot 1 is connected to the Internet via Wifi (a registered trademark) communication for example, and connects to the cloud server 3. The robot 1 also connects to the mobile terminal 4 via Wifi (a registered trademark) communication, for example. A user 1501 is a child for example, and users 1502 and 1503 are the parents of the child, for example.

An application that collaborates with the robot 1 is installed in the mobile terminal 4, for example. The mobile terminal 4 can give various instructions to the robot 1 via the application, and can display the image recognition results described in Fig. 14.

For example, if there is a request from the mobile terminal 4 to read a certain picture storybook to a child, the robot 1 starts reading the picture storybook, and reads to the child. Upon accepting some question from the child while reading the picture storybook, for example, the robot 1 sends the question to the cloud server 3, receives a reply to the request from the cloud server 3, and utters speech indicating the reply.

Thus, the user 1501 can handle the robot 1 like a pet, and can learn language through interaction with the robot 1.

Next, the internal circuits of the robot 1 according to the first embodiment of the present disclosure will be described in detail with reference to Fig. 16. Fig. 16 is a block diagram illustrating the robot 1 according to the first embodiment of the present disclosure, and the cloud server 3 connected to the robot 1. The cloud server 3 corresponds to an example of an external server.

The robot 1 includes the control circuit 109, a communication unit 210, a display unit 211, the rotating shaft 118, casing driving wheels 212, a shaft control unit 213, a casing driving wheel control unit 214, a weight driving mechanism control unit 215, a speaker 216, the camera 108, the microphone 217, and a weight driving mechanism 218, as illustrated in Fig. 16.

The control circuit 109 includes a main control unit 201, a speech information output control unit 202, a facial recognition processing unit 203, a speech recognition processing unit 204, a display information output control unit 205, and memory 206. The control circuit 109 is made up of a computer including a processor such as a CPU or the like.

The main control unit 201 acquires recognition results of the speech of the user from the speech recognition processing unit 204. The main control unit 201 acquires recognition results of the face of the user from the facial recognition processing unit 203.

The main control unit 201 generates commands based on information acquired from the speech recognition processing unit 204 and facial recognition processing unit 203, and transmits these to the speech information output control unit 202, display information output control unit 205, shaft control unit 213, casing driving wheel control unit 214, weight driving mechanism control unit 215, and so forth. Details of the commands will be described later.

The speech information output control unit 202 outputs speech corresponding to commands transmitted from the main control unit 201 from the speaker 216, thereby causing the robot 1 to speak.

The speaker 216 is provided to the frame 102 so that the output plane faces the front, and converts electric signals of the speech into physical vibrations. The speaker 216 corresponds to an example of an output device.

The speech recognition processing unit 204 manages speech recognition results by recognizing whether or not there is the voice of the user in the sound acquired by the microphone 217, and storing speech recognition results in the memory 206. The speech recognition processing unit 204 matches speech recognition data stored in the memory 206 and acquired speech, and recognizes the content that has been spoken.

The microphone 217 is attached to the frame 102, and converts sound into electric signals that are output to the speech recognition processing unit 204. The microphone 217 may be attached to the upper face of the first rotating plate 103, or may be attached to the upper face of the second rotating plate 104, for example. The microphone 217 corresponds to an example of an input device.

The facial recognition processing unit 203 recognizes, from video acquired at the camera 108, whether or not there is the face of the user, position, and size, and accumulates the facial recognition results in the memory 206, thereby managing facial recognition results.

The display information output control unit 205 displays, on the display unit 211, expression information of expressions of the robot 1, in accordance with commands transmitted from the main control unit 201. The display unit 211 is made up of the first display unit 105, second display unit 106, and third display unit 107 illustrated in Fig. 2.

The memory 206 is configured as a non-volatile rewritable storage device for example, and stores control programs of the robot 1 and so forth.

The casing driving wheel control unit 214 operates the casing driving wheels 212 of the robot 1 in accordance with commands transmitted from the main control unit 201. The casing driving wheel control unit 214 is made up of the first motor 112 and second motor 113 described in Fig. 2. The casing driving wheels 212 are made up of the first driving wheel 110 and second driving wheel 111 described in Fig. 2. The casing driving wheels 212 correspond to an example of a set of driving wheels.

The weight driving mechanism control unit 215 operates the weight driving mechanism 218 of the robot 1 in accordance with commands transmitted from the main control unit 201. The weight driving mechanism control unit 215 is made up of a weight driving motor omitted from illustration, built into the counterweight 114. The weight driving mechanism 218 is made up of the guide shaft 115, swing arm 116, rotating motor 117, belt 119, and motor pulley 120 described in Fig. 3, Fig. 8A, and Fig. 8B, and the weight driving motor omitted from illustration.

The shaft control unit 213 rotates the rotating shaft 118 described in Fig. 9A and Fig. 9B in accordance with commands transmitted from the main control unit 201. The shaft control unit 213 is made up of the rotating motor 117 described in Fig. 9A and Fig. 9B. The rotating shaft 118 and shaft control unit 213 correspond to an example of a rotating mechanism.

The communication unit 210 is configured as a communication device to connect the robot 1 to the cloud server 3. A wireless LAN communication device such as Wifi (a registered trademark) or the like, for example, can be employed as the communication unit 210, although this is exemplary.

The cloud server 3 is connected to the robot 1 via the Internet (an example of an external network). The cloud server 3 has a communication unit 301 and a processing unit 302. The communication unit 301 is configured as a communication device for connecting the cloud server 3 to the Internet. The processing unit 302 executes various types of processing following requests from the robot 1, and transmits the processing results to the robot 1 via the communication unit 301.

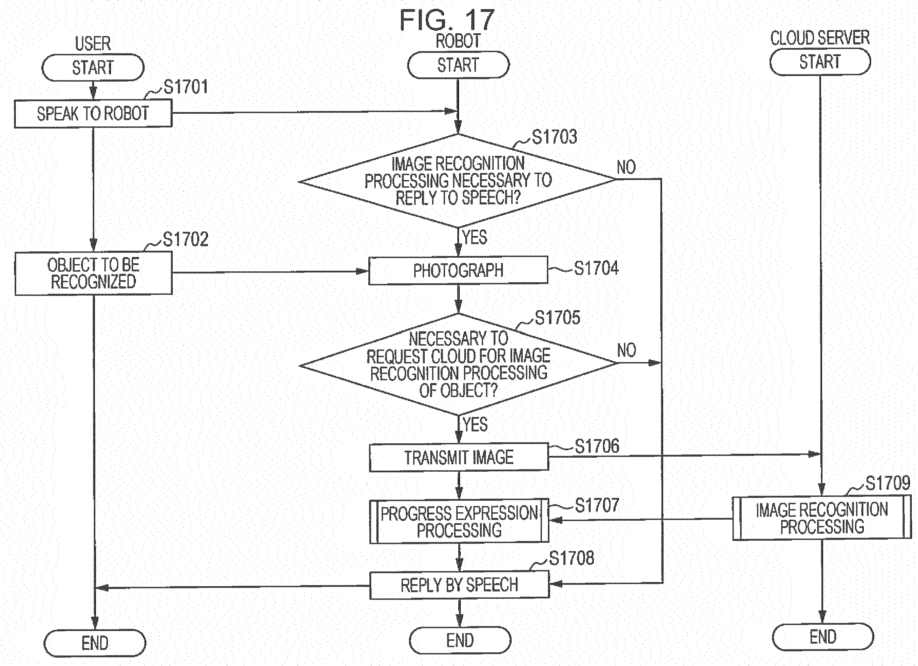

Next, image recognition processing at the robot 1 according to the first embodiment of the present disclosure will be described with reference to Fig. 17. Fig. 17 is a flowchart illustrating image recognition processing at the robot 1 according to the first embodiment of the present disclosure. Processing is performed here where the robot 1 rotates, expressing that the robot 1 is currently performing processing, during the period from the robot 1 commissioning the cloud server 3 to perform image recognition processing until the image recognition results are received.

First, the user speaks to the robot 1 (S1701). For example, the user holds the doll 1402 out in front of the robot 1, and says "What is this?" as described in Fig. 14.

Next, the speech recognition processing unit 204 of the robot 1 determines whether or not there is a need for image recognition processing to reply to this utterance (S1703). Now, the memory 206 stores one or more speech reference data indicating features of speech regarding which image recognition processing is necessary for a reply. Accordingly, the speech recognition processing unit 204 may judge that image recognition processing is necessary, if the degree of similarity between features of the speech that the user has uttered and any one of speech reference data stored in the memory 206 is a threshold value or higher.

For example, speech regarding which image recognition processing is necessary may be speech inquiring about an object to be recognized, such as the "What is this?" described above, or command format speech such as "Execute image recognition processing" may be employed. Further, in order to handle queries regarding numbers, such as a user holding up two fingers, the index finger and the middle finger, and asking "How many is this?", "How many is this?" may be employed as speech necessitating image recognition processing for a reply.

In a case where determination is made in S1703 that image recognition processing is necessary for a reply (YES in S1703), the flow advances to S1704, while in a case where determination is made that image recognition processing is not necessary for a reply (NO in S1703), the flow advances to S1708.

Next, the camera 108 takes one image including the object to be recognized (S1702, S1704). The speech recognition processing unit 204 notifies the main control unit 201 at this time that image recognition processing is necessary, and the main control unit 201 that has received this notification transmits a photography command to the facial recognition processing unit 203, thereby causing the camera 108 to photograph the object to be recognized.

In a case where judgement is made by the speech recognition processing unit 204 that image recognition processing is necessary, the main control unit 201 may notify the speech information output control unit 202 of a message such as "Face the object that you want to know toward the front of the robot." and cause the message to be output from the speaker 216. Accordingly, the robot 1 can cause the user to hold out the object to be recognized to the front of the robot 1, thereby avoiding a situation where the object to be recognized is not included in the shooting range of the camera 108.

Next, the main control unit 201 determines whether or not the image that has been taken in S1704 needs a request for image recognition processing to the cloud server 3 (S1705). In a case where the main control unit 201 determines that there is need to request image recognition processing (YES in S1705), the communication unit 210 transmits the image that has been taken in S1704 to the cloud server 3 (S1706). On the other hand, in a case where the main control unit 201 determines that there is no need to request image recognition processing (NO in S1705), the processing advances to S1708.

Now, recognition-unnecessary reference data, that is features of a reference image regarding which a request for image recognition processing is unnecessary, is stored in the memory 206 beforehand. Accordingly, if the degree of similarity between the features of the image taken in S1704 and the recognition-unnecessary reference data is a threshold value or higher, the main control unit 201 may determine that no request for image recognition processing is necessary, and determine that a request image recognition processing is necessary if the degree of similarity between the features of the image taken in S1704 and the recognition-unnecessary reference data is below the threshold value.

A reference image includes a facial image of the user, for example. The facial image of the user may include a facial image of a child who mainly handles the robot 1, and facial images of family members of the child, for example. This takes into consideration the point that requesting the cloud server 3 every single time to perform image recognition processing regarding the frequently-performed processing of recognizing the face of the user will increase the standby time of the user, increasing user stress. An image where the user is holding up one or more fingers, such as one finger, two fingers, or the like, may also be employed as a reference image.

Next, the robot 1 performs progress expression processing until image recognition results are obtained (S1707). Details of the progress expression processing will be described later.

In a case where a request for image recognition processing to the cloud server 3 is necessary, a predetermined amount of time or longer is taken until the image recognition results are obtained. In this case, there is a risk of the user judging that the robot 1 is malfunctioning, if the robot 1 performs no actions. Accordingly, in the present embodiment, in a case where image recognition processing needs to be requested to the cloud server 3, the later-described progress expression processing (S1707) is performed.

Next, the cloud server 3 performs image recognition processing (S1709). Details of image recognition processing will be described later.

When image recognition results are obtained, the robot 1 ends the progress expression processing.

Next, the speech information output control unit 202 outputs the image recognition results from the speaker 216, thereby giving a reply of the image recognition results by speech (S1708). In this case, the speech information output control unit 202 outputs speech indicating the name of the object to be recognized, for example, from the speaker 216. For example, in a case where the doll 1402 is recognized as illustrated in Fig. 14, speech "a doll" is output from the speaker 216.

In a case where determination of NO in S1703 and NO in S1705 is made, the processing of S1708 is as follows. An example of a case where determination is made that there is no need for image recognition processing for a reply to the speech (NO in S1703) is a case where the user has a conversation with the robot 1. In this case, it is sufficient for the speech information output control unit 202 to output speech from the speaker 216, responding to the conversation with the user, in S1708.

Examples of a case where there is no need to request the cloud server 3 for image recognition processing for the image taken in S1704 (NO in S1705) are a case where the user asks his/her own name to the robot 1, or the user holds up fingers and asks, "How many?". In this case, it is sufficient for the speech information output control unit 202 to output the name of the user, or speech such as "That's two." from the speaker 216 in S1708.

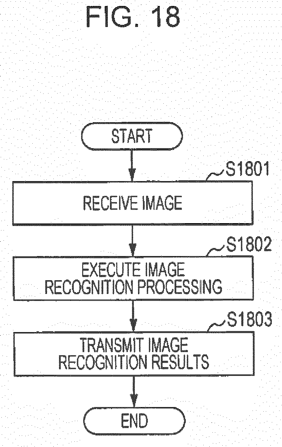

Fig. 18 is a flowchart illustrating details of the image recognition processing shown in S1709 in Fig. 17, in the first embodiment of the present disclosure. First, the communication unit 301 receives the image transmitted from the robot 1 (S1801).

Next, the processing unit 302 performs image recognition processing (S1802). In the usage case illustrated in Fig. 14, for example, the image including the doll 1402 is the object of the image recognition processing. The processing unit 302 has an object model database, obtained by computer learning, for example, where features of images of objects and names of objects have been registered in a correlated manner. The processing unit 302 extracts features from images transmitted from the robot 1, matches the extracted features with features of the objects registered in the object model database, and determines the object of which the degree of similarity is highest to be the object to be recognized. In the example in Fig. 14, "a doll" is the image recognition results.

Next, the communication unit 301 transmits the image recognition results from the processing unit 302 to the robot 1 (S1803).

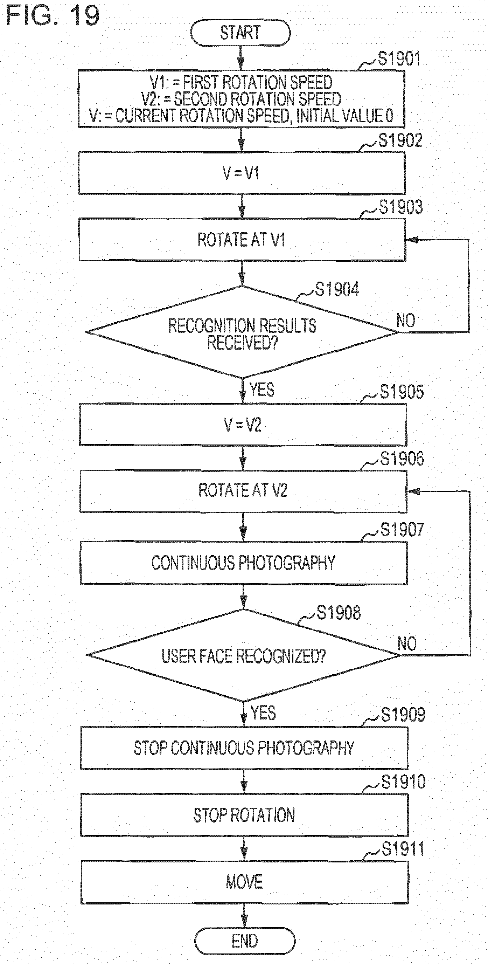

Fig. 19 is a flowchart illustrating details of progress expression processing shown in S1707 of Fig. 17 in the first embodiment of the present disclosure.

First, the main control unit 201 prepares a first rotation speed V1, a second rotation speed V2 that is lower than the first rotation speed V1, and a rotation speed V that is a variable for setting the current rotation speed (S1901). The rotation speed V is set to 0 as a default value in S1901.

Now, the first rotation speed V1 is a rotation speed of the robot 1 when notifying the user that the robot 1 is currently performing processing. The second rotation speed V2 is a rotation speed of the robot 1 when the camera 108 performs continuous shooting of the surrounding environment to detect the position of the user. If the second rotation speed V2 is excessively great, images of the surrounding environment may be blurred, and there is a possibility that the user cannot be detected well. On the other hand, if the second rotation speed V2 is excessively small, time for detecting the position of the user becomes excessive, and will stress the user. Accordingly, a speed at which the surrounding environment can be accurately shot can be employed as the second rotation speed V2. Although the second rotation speed V2 has been described as being lower than the first rotation speed V1 here, it may be higher.

Next, the main control unit 201 sets the rotation speed V to the first rotation speed V1 (S1902).

Next, the casing driving wheel control unit 214 accepts a command from the main control unit 201 to set the rotation speed V to the first rotation speed V1, and rotates the robot 1 at the first rotation speed V1 (S1903). In detail, it is sufficient for the casing driving wheel control unit 214 to drive the first motor 112 and second driving motor 113 so that the first driving wheel 110 and second driving wheel 111 making up the casing driving wheels 212 each rotate in opposite directions at the first rotation speed V1.

Next, if the communication unit 210 has not received the image recognition results (NO in S1904), the main control unit 201 returns the flow to S1903, and the processing of S1903 through S1904 is performed. Accordingly, the robot 1 repeats rotating actions until the image recognition results are received, and thus can notify the user that image recognition processing is currently being performed.

On the other hand, upon the communication unit 210 receiving the image recognition results (YES in S1904), the main control unit 201 sets the rotation speed V to the second rotation speed V2 (S1905).

Next, the casing driving wheel control unit 214 accepts a command from the main control unit 201 to set the rotation speed V to the second rotation speed V2, and rotates the robot 1 at the second rotation speed V2 (S1906). In detail, it is sufficient for the casing driving wheel control unit 214 to drive the first motor 112 and second driving motor 113 so that the first driving wheel 110 and second driving wheel 111 making up the casing driving wheels 212 each rotate in opposite directions at the second rotation speed V2. Thus, a rotation action of the robot 1 to detect the position of the user is performed.

Next, the facial recognition processing unit 203 accepts a photography command from the main control unit 201 to perform continuous shooting, and causes the camera 108 to perform continuous shooting of images of the surrounding environment (S1907).

Next, if recognition of the face of the user has been successful (YES in S1908), the facial recognition processing unit 203 notifies the main control unit 201 of this, and stops the continuous shooting by the camera 108 (S1909). On the other hand, if recognition of the face of the user has not been successful (NO in S1908), the facial recognition processing unit 203 returns the flow to S1906. Thus, the robot 1 performs continuous shooting of images of the surrounding environment until the face of the user is recognized.

Now, it is sufficient for the facial recognition processing unit 203 to determine that the user is in an image in the surrounding environment, when an image of the surrounding environment is detected that includes an object of which the degree of similarity as to features of an image of the face of the user stored in the memory 206 is a threshold value or greater. The facial recognition processing unit 203 then can detect the position of the user in the real space from the position and size of the face of the user in the image of the surrounding environment that has been detected. Now, it is sufficient for the position of the user that is detected to be identified by an angle between a reference direction for the robot 1 and the user at the point of shooting the relevant image of the surrounding environment, and the distance from the robot 1 to the user, for example. The direction of advancing of the robot 1 (the direction direct to the front of the robot 1) can be employed as the reference direction. Further, the facial recognition processing unit 203 may detect the orientation of the face of the user from the shape and so forth of the face of the user included in the relevant image of the surrounding environment.

Note that if multiple features of images of user faces are stored in the memory 206, and there are multiple users of which features are stored in the memory 206 included in the surroundings of the robot 1, there is a possibility that the position of a user separate from the user that has held out the object to be recognized will be detected.

In order to prevent this, the facial recognition processing unit 203 photographs the face of the user that has held out the object to be recognized at the time of starting the image recognition processing, and extracts features of the face of the user, which are stored in the memory 206. The facial recognition processing unit 203 may then determine that the user is present in the image of the surrounding environment when an image of the surrounding environment, including an object of which the degree of similarity as to the features stored in the memory 206 is a threshold value or higher, is detected. For example, it is sufficient for the facial recognition processing unit 203 to photograph an image of the object to be recognized in S1704 in Fig. 17 such that the face of the user holding out the object to be recognized is included, extract the features of the face of the user from the image that is obtained, and store in the memory 206.

In S1910, the casing driving wheel control unit 214 accepts a command from the main control unit 201 to stop rotation of the robot 1, and stops the rotation of the robot 1 by stopping driving by the first motor 112 and second driving motor 113.

In S1911, the casing driving wheel control unit 214 acquires a command from the main control unit 201 to move the robot 1 to near the position where the user has been detected in S1908, and drives the first driving wheel 110 and second driving wheel 111 so that the robot 1 moves to near this position. At this time, it is sufficient for the main control unit 201 to output a command to the casing driving wheel control unit 214 for the display unit 211 of the robot 1 to face the front of the user.

In detail, the main control unit 201 first outputs a command to the casing driving wheel control unit 214, to cause the robot 1 to move to near the position of the relevant user. When the robot moves to near the position of the relevant user, the main control unit 201 may output a command to stop the rotation of the robot 1 to the casing driving wheel control unit 214 so that the orientation of the face of the user detected in S1908 is direct to the display unit 211.

Thus, according to the present embodiment, in a case where a predetermined amount of time or more is needed to respond to a query from the user, the first driving wheel 110 and second driving wheel 111 are each rotated in opposite directions to rotate the casing 101, thereby rotating the robot 1. Thus, the shape of the spherical robot 1 can be used to notify the user that the robot 1 is currently performing processing by rotation of the robot 1, during conversation with the user.

Also, according to the present embodiment, the results of the image recognition processing are output to the user, with the front of the robot 1 facing the user. This can prevent trouble in which the results of the image recognition processing are output in a state where the front of the robot 1 is not facing the user.

### (Second Embodiment)

A feature of a second embodiment is that rotation speed of the robot 1 is reduced as the progress state of image recognition processing advances. Note that configurations the same as those in the first embodiment are denoted by the same symbols in the second embodiment, and description will be omitted.

The overall processing in the second embodiment is the same as that in Fig. 17, but S1709 and S1707 differ.

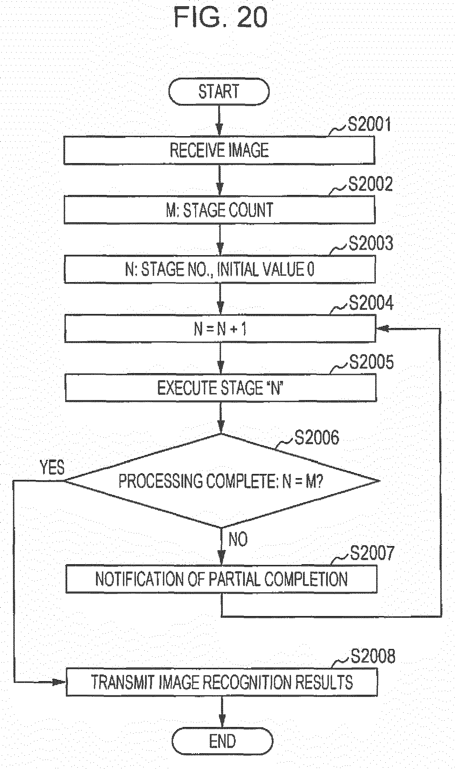

Fig. 20 is a flowchart illustrating details of the image recognition processing in S1709 of Fig. 17, according to the second embodiment of the present disclosure. S2001 and S2008 are the same as S1801 and S1803 in Fig. 18, so description will be omitted.

In S2002, the processing unit 302 prepares a parameter for stipulating a stage count M needed for image recognition processing. The stage count M employs a value set beforehand in accordance with the content of the image recognition processing that the cloud server 3 employs. For example, if image recognition processing made up of stage count of three is employed for the cloud server 3, M = 3 is set.

In S2003, the processing unit 302 sets a stage No. N to the initial value "0". The stage No. N here is a No. for identifying the stage being processed.

In S2004, the processing unit 302 increments the stage No. N by one.

In S2005, the processing unit 302 executes image recognition processing for stage No. N.

In S2006, the processing unit 302 judges whether or not the stage No. N has reached the stage count M. In a case where the stage No. N has reached the stage count M (YES in S2006), the image recognition results have been obtained so the processing unit 302 advances the flow to S2008.

If the stage No. N has not reached the stage count M (NO in S2006), the processing unit 302 uses the communication unit 210 to notify the robot 1 that part of the image recognition results has been completed (S2007). At this time, the processing unit 302 transmits the stage No. N regarding which processing has ended, and the stage count M, to the robot 1.

Upon the processing in S2007 ending, the flow returns to S2004. Accordingly, image recognition processing for the next stage No. N is executed.

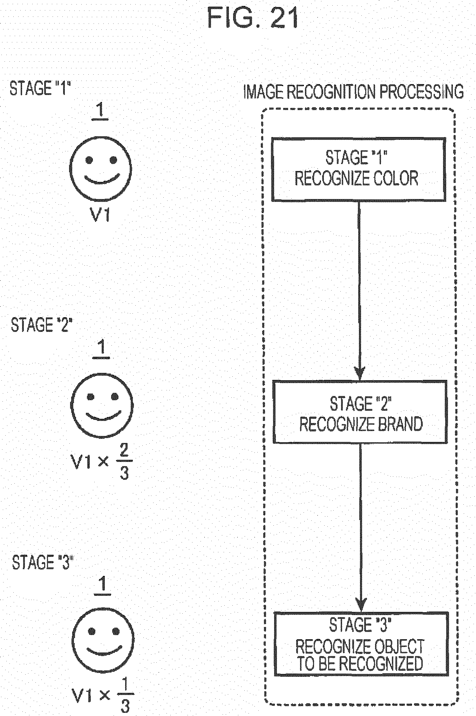

Next, the stages of image recognition processing will be described. Fig. 21 is a diagram illustrating the relationship between the rotation speed of the robot 1, and the stage indicated by a stage No. "N" in image recognition processing. In the example in Fig. 21, the image recognition processing is made up of three stages "1", "2", and "3", indicated by stage Nos. N = 1, 2, and 3.

Stage "1" is a stage where the color of the object to be recognized is recognized, stage "2" is a stage where the brand of the object to be recognized is recognized, and stage "3" is a stage where what the object to be recognized is, finally is recognized.

For example, if the object to be recognized is a commercially-sold soft drink, the color making up the soft drink is recognized in stage "1". For example, if the soft drink is water, the recognition results will be "transparent". The processing unit 302 may extract the object to be recognized from the image transmitted from the robot 1, for example, and perform processing to analyze the color of the object to be recognized that has been extracted, thereby recognizing the color of the object to be recognized. There are cases where the object to be recognized is made up of multiple colors. In this case, the processing unit 302 may take the colors of several top colors making up a certain percentage or more as the recognition results.

In stage "2", the processing unit 302 recognizes a brand name by recognizing text listed on the label of the soft drink bottle, for example. If a product name "XXX" is listed on the label of the soft drink bottle, the recognition results are "XXX", for example.

In stage "3", the processing unit 302 finally recognizes what the object to be recognized is, for example, using the above-described object model database. For example, if a soft drink is recognized, the recognition results will be "soft drink". Now, if the type of soft drink has been recognized as well, the recognition result will be "soft drink: water".

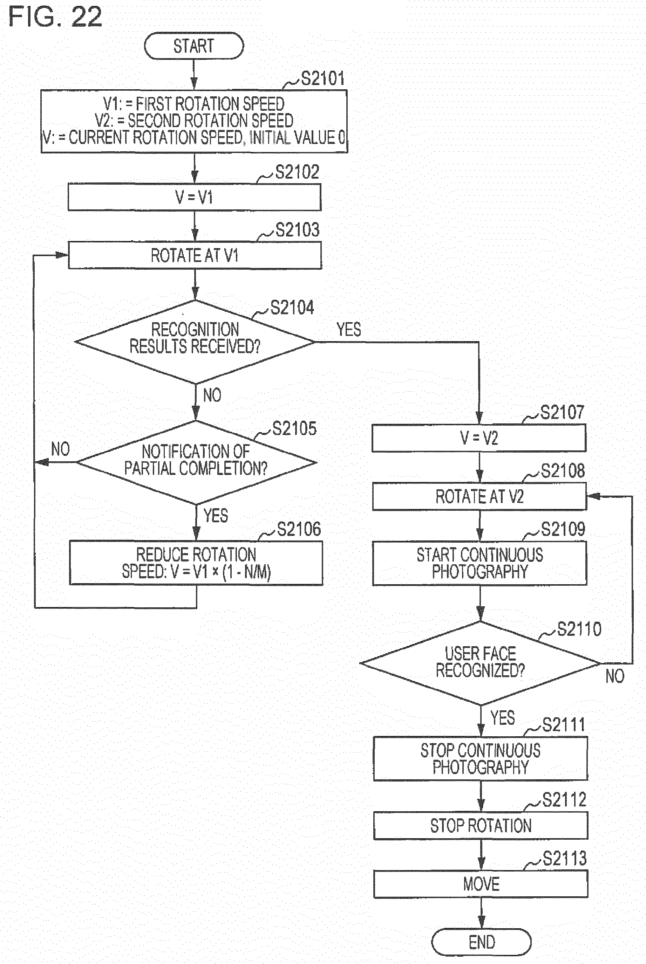

Fig. 22 is a flowchart illustrating details of progress expression processing shown in S1707 of Fig. 17 in the second embodiment of the present disclosure.

S2101, S2102, S2103, S2104, S2107, S2108, S2109, S2110, S2111, S2112, and S2113, in Fig. 22, are the same as S1901, S1902, S1903, S1906, S1904, S1905, S1907, S1908, S1909, S1910, and S1911, in Fig. 19, so description will be omitted.

S2105 is processing of the robot 1 receiving the notification that part of the image recognition processing has been completed, which the cloud server 3 has transmitted in S2007 in Fig. 20. If no notification has been received from the cloud server 3 by the communication unit 210 to the effect that part of image recognition processing has been completed (NO in S2105), the main control unit 201 returns the flow to S2103. On the other hand, if the notification to the effect that part of the image recognition processing has been completed has been received by the communication unit 210 from the cloud server 3 (YES in S2105), the main control unit 201 advances the flow to S2106. In S2105, the robot 1 receives the stage No. N, of which processing has ended, and the stage count M.

In S2106, the main control unit 201 uses the stage No. N, of which processing has ended, and the stage count M, received in S2105, to set the rotation speed V to V = V1 × (1 - N/M), and reduce the rotation speed V. For example, when stage "1" ends, the robot 1 receives N = 1 in S2105, and so a rotation speed V is set to V = V1 × (1 - 1/M) in the processing in stage "2".

Accordingly, the main control unit 201 sets the rotation speed V one step lower each time the stage of image recognition processing progresses by one stage.

In the example in Fig. 21, the main control unit 201 sets the rotation speed V to V1 in the processing of stage "1". Accordingly, the first driving wheel 110 and second driving wheel 111 are rotated at opposite directions from each other at the rotation speed V1, and the robot 1 rotates at the rotation speed V1.

When the processing of stage "1" ends, the main control unit 201 sets the rotation speed V to V = V1 × 2/3. Accordingly, the first driving wheel 110 and second driving wheel 111 are rotated at opposite directions from each other at rotation speed V1 × 2/3 in the processing of stage "2", and the robot 1 rotates at rotation speed V1 × 2/3.

When the processing of stage "2" ends, the main control unit 201 sets the rotation speed V to V = V1 × 1/3. Accordingly, the first driving wheel 110 and second driving wheel 111 are rotated at opposite directions from each other at rotation speed V1 × 1/3 in the processing of stage "3", and the robot 1 rotates at rotation speed V1 × 1/3.

Thus, according to the present embodiment, the amplitude of the counterweight 114 is reduced as the stages of image recognition processing advance, so the user can be notified of the state of progress of the image recognition processing through the actions of the robot 1.

Upon the results of image recognition processing of stage "M" being received in S2104 in Fig. 22 (YES in S2104), the flow advances to S2107. Processing of S2107 and thereafter is the same as the processing of S1905 and thereafter in Fig. 19. Now, it is sufficient for a value to be employed for the rotation speed V2 set in S2107 that is slower than the rotation speed of the robot 1 in the final stage "M" of the image recognition processing. Accordingly, a situation where the user is given an unnatural sensation due to the rotation speed V of the robot 1 after ending the final stage "M" increasing can be prevented.

Thus, according to the second embodiment, the rotation speed of the robot 1 is reduced as the stages of image recognition processing advance, so the user can be notified of the state of progress of the image recognition processing through the actions of the robot 1.

### (First Modification)

In the first and second embodiments, the robot 1 is made to rotate in a case of requesting the cloud server 3 to perform image recognition processing. The present disclosure is not restricted to this, and the robot 1 may be made to rotate in a case of requesting the cloud server 3 to perform processing other than image recognition processing (e.g., audio recognition processing). A predetermined amount of time or longer may be required until obtaining processing results in a case of requesting the cloud server 3 to perform processing other than image recognition processing, as well. In this case, the user can be prevented from judging that the robot 1 is malfunctioning by causing the robot 1 to rotate until processing results are received.

### (Second Modification)

While the display unit 211 is provided in the first and second embodiments, this is exemplary, and the display unit 211 may be omitted. The display unit 211 displays a part of the face of the robot, so an expression of the robot 1 currently performing processing can be made better with the display unit 211, but the user can be sufficiently notified that the robot 1 is currently performing processing by causing the robot 1 to rotate until processing results are received, even without the display unit 211.

### (Third Modification)

While the rotation speed V is reduced in increments of V1 × "N/M" as the stage of image recognition processing advances in the second embodiment, this is exemplary, and an arrangement may be made where the rotation speed V is reduced such that the amount of reduction in rotation speed V increases or decreases as the stage advances.

### (Fourth Modification)

While the user is discovered using the camera 108 after ending of the image recognition processing in the first and second embodiments, the present disclosure is not restricted to this. For example, when the user speaks to request image recognition processing, the speech recognition processing unit 204 acquires the voice of the speech using the microphone 217, identifies the position of the user from the direction and intensity of the acquired voice, and stores in the memory 206. It is then sufficient for the main control unit 201 to output a command to the casing driving wheel control unit 214, to move the robot 1 to the position of the user stored in the memory 206 when the image recognition processing ends. Now, there are cases where the user moves to a different position from speaking to request the image recognition processing until the image recognition processing ends. In this case, the speech recognition processing unit 204 extracts features of the voice when acquiring the voice speaking to request the image recognition processing, and stores in the memory 206. The speech recognition processing unit 204 may then monitor the voice uttered by this user using the features stored in the memory 206 unit the image recognition processing ends, thereby tracking the position of the user.

### (Overview of Embodiments of the Present Disclosure)

A robot according to an aspect of the present disclosure includes: a spherical casing; a frame that is disposed on an inner side portion of the casing; an input device that is provided to the frame; an output device that is provided to the frame; a communication circuit that is provided to the frame and connected to an external network; a set of driving wheels that are provided to the frame, the driving wheels coming into contact with an inner circumferential face of the casing and rotating the casing; and a control circuit that in a case of responding based on predetermined processing that requires a predetermined amount of time or more as to an input instruction by a user input via the input device, causes the set of driving wheels to rotate in opposite directions from each other to rotate the spherical casing, and when outputting a response based on the predetermined processing via the output device, stops rotation of the spherical casing with a direction of advancing by the set of wheels facing toward the user.

According to this aspect, in a case of responding based on predetermined processing that requires a predetermined amount of time or more as to an input instruction by a user input via the input device, the set of driving wheels is caused to rotate in opposite directions from each other to rotate the spherical casing. Accordingly, the shape of the spherical robot can be used to notify the user that the robot is currently performing processing by rotation of the casing, during conversation with the user.

Also, in a case of having received the response based on the predetermined processing, if the rotation of the spherical casing is simply stopped, the robot may stop in a state where the front, which is the direction of advancing of the robot, is not facing the user.

According to this aspect, when outputting a response based on the predetermined processing via the output device, rotation of the spherical casing is stopped with the direction of advancing by the set of wheels facing toward the user. Accordingly, a response based on the results of the predetermined processing can be output toward the user. Thus, trouble in which a response based on the results of the predetermined processing is output in a state where the front of the robot is not facing the user can be prevented.

Also, in the above aspect, for example, a camera may be further included, provided to the frame with a photographing direction facing in the advancing direction.

In this case, the camera makes up part of the face of the robot, such as a mouth or nose, for example. Accordingly, when outputting a response based on the predetermined processing via the output device, rotation of the spherical casing is stopped with the camera facing toward the user. Accordingly, a response based on the results of the predetermined processing can be output toward the user. Thus, trouble in which a response based on the results of the predetermined processing is output in a state where the face of the robot is not facing the user can be prevented.

Also, in the above aspect, for example, the control circuit may perform imaging using the camera while the spherical casing is rotating, and recognize a position of the user based on an image imaged by the camera and stops rotation of the spherical casing with the display unit facing the position of the user that has been recognized, by the time that a response based on results of the predetermined processing is output via the output device.

According to this aspect, the position of the user is recognized based on an image imaged by the camera, so the position of the user can be accurately recognized.

Also, in the above aspect, for example, a display unit may be further included, that is provided to the frame facing in the advancing direction, and displays at least part of a face of the robot.

In this case, the part of the face of the robot displayed on the display unit makes a mouth or nose, for example. Accordingly, when outputting a response based on the predetermined processing via the output device, rotation of the spherical casing is stopped with the display unit that displays at least part of the face facing toward the user. Accordingly, a response based on the results of the predetermined processing can be output toward the user. Thus, trouble in which a response based on the results of the predetermined processing is output in a state where the face of the robot is not facing the user can be prevented.

Also, in the above aspect, for example, after rotation of the spherical casing has been stopped, the control circuit may output a response based on the results of the predetermined processing via the output device, in a state with the display unit facing the position of the user that has been recognized.

According to this aspect, a response based on the results of the predetermined processing is output with the display unit facing the position of the user, after the casing has stopped rotating.

Also, in the above aspect, for example, the predetermined processing may be made up of two or more procedures, the control circuit controlling the rotation speed of the set of driving wheels to reduce the speed of the spherical casing rotating, each time each of the two or more procedures ends.

According to this aspect, the rotation speed of the set of driving wheels is reduced as the procedures of the predetermined processing advance, so the user can be notified of the state of progress of the predetermined processing through the actions of the robot.

Also, in the above aspect, for example, the predetermined processing may be image recognition processing performed at an external server connected via the external network.

The processing load of image recognition processing is excessive, and accordingly the processing is often performed at an external server. In this case, a predetermined amount of time or more is taken until the processing result is obtained. In the present aspect, the robot performs actions of rotating until the processing results are obtained, even in a case where the predetermined processing is executed at an external server. Accordingly, the user can be notified that internal processing is being executed.

Also, in the above aspect, for example, in the image recognition processing, the control circuit may use the camera to cause an object to be recognized to be imaged, use the communication circuit to cause an image of the object to be recognized, which has been imaged, to be transmitted to the external server via the external network, use the communication circuit to cause recognition results of the image of the object to be recognized from the external server to be received, and cause the received recognition results to be output via the output device.

According to this aspect, image recognition processing, of which the processing load is excessive, is executed at an external server, so it is sufficient for the robot to image the object to be recognized and receive the recognition results from the external server, so the processing load of the robot can be reduced.

Also, in the above aspect, for example, the input device may be a microphone, and the input instruction by the user input via the input device may be an instruction by speech.

According to this aspect, the robot can be given instructions for predetermined processing simply by the user uttering speech for input instructions, without manually inputting input instructions. Accordingly, the load on the user at the time of inputting input instructions is reduced. This aspect is particularly useful for users regarding which manual input is difficult, such as toddlers.

Also, in the above aspect, for example, the output device may be a speaker.

According to this aspect, the processing results are output through the speaker, so the user can know the processing results without watching the robot.

A robot according to another aspect of the present disclosure includes: a spherical casing; a frame that is disposed on an inner side portion of the casing; a display unit that is provided to the frame, and displays at least part of a face of the robot; an input device that is provided to the frame; an output device that is provided to the frame; a communication circuit that is provided to the frame and connected to an external network; a set of driving wheels that are provided to the frame, the driving wheels coming into contact with an inner circumferential face of the casing and rotating the casing; and a control circuit that in a case of responding based on predetermined processing that requires a predetermined amount of time or more as to an input instruction by a user input via the input device, causes the set of driving wheels to rotate in opposite directions from each other to rotate the spherical casing, and when outputting a response based on the predetermined processing via the output device, stops rotation of the spherical casing with the display unit facing toward the user.

According to this aspect, in a case of responding based on predetermined processing that requires a predetermined amount of time or more as to an input instruction by a user input via the input device, the set of driving wheels is caused to rotate in opposite directions from each other to rotate the spherical casing. Accordingly, the shape of the spherical robot can be used to notify the user that the robot is currently performing processing by rotation of the robot, during conversation with the user.

Also, the display unit makes up part of the face of the robot, such as a mouth or nose, for example. In a case of having received the response based on the predetermined processing, if the rotation of the spherical casing is simply stopped, the robot may stop in a state where the face of the robot is not facing the user.

According to this aspect, when outputting a response based on the predetermined processing via the output device, rotation of the spherical casing is stopped with the display unit facing toward the user. Accordingly, a response based on the results of the predetermined processing can be output toward the user. Thus, trouble in which a response based on the results of the predetermined processing is output in a state where the face of the robot is not facing the user can be prevented.

Also, in the above aspect, for example, a camera provided to the frame may be further included. The control circuit may perform imaging using the camera while the spherical casing is rotating, and recognize a position of the user based on an image imaged by the camera and stops rotation of the spherical casing with the display unit facing the position of the user that has been recognized, by the time that a response based on results of the predetermined processing is output via the output device.

According to this aspect, the position of the user is recognized based on an image imaged by the camera, so the position of the user can be accurately recognized.

Also, in the above aspect, for example, after rotation of the spherical casing has been stopped, the control circuit may output a response based on the results of the predetermined processing via the output device, in a state with the display unit facing the position of the user that has been recognized.

According to this aspect, a response based on the results of the predetermined processing is output with the display unit facing the position of the user, after the casing has stopped rotating.

Also, in the above aspect, for example, the predetermined processing may be made up of two or more procedures, the control circuit controlling the rotation speed of the set of driving wheels to reduce the speed of the spherical casing rotating, each time each of the two or more procedures ends.

According to this aspect, the rotation speed of the set of driving wheels is reduced as the procedures of the predetermined processing advance, so the user can be notified of the state of progress of the predetermined processing through the actions of the robot.

Also, in the above aspect, for example, a camera provided to the frame may further be included. The predetermined processing may be image recognition processing performed at an external server connected via the external network.

The processing load of image recognition processing is excessive, and accordingly the processing is often performed at an external server. In this case, a predetermined amount of time or more is taken until the processing result is obtained. In the present aspect, the robot performs actions of rotating until the processing results are obtained, even in a case where the predetermined processing is executed at an external server. Accordingly, the user can be notified that internal processing is being executed.

In the above aspect, for example, in the image recognition processing, the control circuit may use the camera to cause an object to be recognized to be imaged, use the communication circuit to cause an image of the object to be recognized, which has been imaged, to be transmitted to the external server via the external network, use the communication circuit to cause recognition results of the image of the object to be recognized from the external server to be received, and cause the received recognition results to be output via the output device.

According to this aspect, image recognition processing, of which the processing load is excessive, is executed at an external server, so it is sufficient for the robot to image the object to be recognized and receive the recognition results from the external server, so the processing load of the robot can be reduced.

A robot according to yet another aspect of the present disclosure includes: a spherical casing; a frame that is disposed on an inner side portion of the casing; a display unit that is provided to the frame, and displays at least part of a face of the robot; a camera provided to the frame; an input device that is provided to the frame; an output device that is provided to the frame; a communication circuit that is provided to the frame and connected to an external network; a set of driving wheels that are provided to the frame, the driving wheels coming into contact with an inner circumferential face of the casing and rotating the casing; and a control circuit that, in a case of determining that image recognition is necessary regarding a speech instruction by a user input via the input device, uses the camera to cause an object to be recognized to be imaged, causes an image of the object to be recognized that has been imaged, to be transmitted to an external server via the external network, causes recognition results of the image of the object to be recognized to be received from the external server, and causes the received recognition results to be output via the output device. In a case where recognition results of the image of the object to be recognized by the external server are necessary, the control circuit causes the set of driving wheels to rotate in opposite directions from each other to rotate the spherical casing, and upon receiving the recognition results of the image of the object to be recognized from the external server, stops rotation of the spherical casing with the display unit facing toward the user.

According to this aspect, in a case where recognition results of the image of the object to be recognized by the external server are necessary for the robot to respond to the query by the user, the set of driving wheels is caused to rotate in opposite directions from each other to rotate the spherical casing. Accordingly, when the image recognition is necessary, the shape of the spherical robot can be used to notify the user that the robot is currently performing processing by rotation of the robot, during conversation with the user.

Also, the display unit makes up part of the face of the robot, such as a mouth or nose, for example. In a case of having received the recognition results, if the rotation of the spherical casing is simply stopped, the robot may stop in a state where the face of the robot is not facing the user.

According to this aspect, upon receiving recognition results of an image of the object to be recognized from the external server, rotation of the spherical casing is stopped with the display unit facing toward the user. Accordingly, the recognition results can be output toward the user. Thus, trouble in which recognition results are output in a state where the face of the robot is not facing the user can be prevented.

In the above aspect, for example, the control circuit may perform imaging using the camera while the spherical casing is rotating, and recognize a position of the user based on an image imaged by the camera and stop rotation of the spherical casing with the display unit facing the position of the user that has been recognized, by the time that a response based on recognition results is output via the speaker.

According to this aspect, the position of the user is recognized based on an image imaged by the camera, so the position of the user can be accurately recognized.

In the above aspect, for example, memory that stores reference data for image recognition may be included. In a case where judgement is made that recognition results of the image of the object to be recognized by the external server are not necessary for responding to the speech instruction by the user, and that the response can be made by image recognition of the object to be recognized based on the reference data for image recognition stored in the memory, the control circuit may cause recognition results based on the reference data to be output via the speaker, without performing control to rotate the spherical casing by rotation of the set of driving wheels.

For example, an arrangement may be made where memory is provided within the robot, and facial recognition of the user or the like is performed using reference data for image recognition that is stored in the memory.

In a case where the user asks the robot, "Who am I?" for example, there is no need for recognition results of an image of the object to be recognized by the external server, and it is sufficient to reference the reference data for image recognition stored in the memory within the robot. Also, in a case where the user holds up two fingers, the index finger and the middle finger, and asks the robot "How many is this?", there is no need for recognition results of an image of the object to be recognized by the cloud server, and it is sufficient to reference the reference data for image recognition stored in the memory within the robot. In such cases, the user is hardly made to wait at all.

Accordingly, in such a case, recognition results based on the reference data are output via the speaker, without performing control to cause the spherical casing to rotate by rotation of the set of driving wheels.

In the above aspect, for example, after rotation of the spherical casing has been stopped, the control circuit may output a response based on the results of the predetermined processing via the output device, in a state with the display unit facing the position of the user that has been recognized.

According to this aspect, a response based on the results of the predetermined processing is output with the display unit facing the position of the user, after the casing has stopped rotating.

In the above aspect, for example, the image recognition processing may be made up of two or more procedures, the control circuit controlling the rotation speed of the set of driving wheels to reduce the speed of the spherical casing rotating, each time each of the two or more procedures ends.

According to this aspect, the rotation speed of the set of driving wheels is reduced as the procedures of the predetermined processing advance, so the user can be notified of the state of progress of the predetermined processing through the actions of the robot.

### Industrial Applicability

A robot according to exemplary embodiments of the present disclosure is useful in notifying a user of the state of progress of internal processing. Reference Signs List

M stage count
N stage No.
1 robot
3 cloud server
4 mobile terminal
9 control circuit
101 casing
102 frame
103 first rotating plate
104 second rotating plate
105 first display unit
106 second display unit
107 third display unit
108 camera
109 control circuit
110 first driving wheel
111 second driving wheel
112 first motor
113 second motor
114 counterweight
115 guide shaft
116 swing arm
117 rotating motor
118 rotating shaft
119 belt
120 motor pulley
201 main control unit
202 speech information output control unit
203 facial recognition processing unit
204 speech recognition processing unit
205 display information output control unit
206 memory
210 communication unit
211 display unit
212 casing driving wheels
213 shaft control unit
214 casing driving wheel control unit
215 weight driving mechanism
215 driving mechanism control unit
216 speaker
217 microphone
218 weight driving mechanism
301 communication unit
302 processing unit
1500 robot system

## Claims

1. A robot, comprising:
a spherical casing;
a frame that is disposed on an inner side portion of the casing;
an input device that is provided to the frame;
an output device that is provided to the frame;
a communication circuit that is provided to the frame and connected to an external network;
a set of driving wheels that are provided to the frame, the driving wheels coming into contact with an inner circumferential face of the casing and rotating the casing; and
a control circuit that
in a case of responding based on predetermined processing that requires a predetermined amount of time or more as to an input instruction by a user input via the input device, causes the set of driving wheels to rotate in opposite directions from each other to rotate the spherical casing, and
when outputting a response based on the predetermined processing via the output device, stops rotation of the spherical casing with a direction of advancing by the set of wheels facing toward the user.

2. The robot according to Claim 1, further comprising:
a camera, provided to the frame with a photographing direction facing the advancing direction.

3. The robot according to Claim 2,
wherein the control circuit
performs imaging using the camera while the spherical casing is rotating, and
recognizes a position of the user based on an image imaged by the camera and stops rotation of the spherical casing with the display unit facing the position of the user that has been recognized, by the time that a response based on results of the predetermined processing is output via the output device.

4. The robot according to Claim 3, further comprising:
a display unit that is provided to the frame facing in the advancing direction, and displays at least part of a face of the robot.

5. The robot according to Claim 4,
wherein, after rotation of the spherical casing has been stopped, the control circuit outputs a response based on the results of the predetermined processing via the output device, in a state with the display unit facing the position of the user that has been recognized.

6. The robot according to Claim 1,
wherein the predetermined processing is made up of two or more procedures,
and wherein the control circuit controls the rotation speed of the set of driving wheels to reduce the speed of the spherical causing rotating, each time each of the two or more procedures ends.

7. The robot according to Claim 2,
wherein the predetermined processing is image recognition processing performed at an external server connected via the external network.

8. The robot according to Claim 7,
wherein, in the image recognition processing, the control circuit uses the camera to cause an object to be recognized to be imaged,
uses the communication circuit to cause an image of the object to be recognized, which has been imaged, to be transmitted to the external server via the external network,
uses the communication circuit to cause recognition results of the image of the object to be recognized from the external server to be received, and
causes the received recognition results to be output via the output device.

9. The robot according to any one of Claims 1 through 8,
wherein the input device is a microphone,
and wherein the input instruction by the user input via the input device is an instruction by speech.

10. The robot according to Claim 9,
wherein the output device is a speaker.

11. A robot, comprising:
a spherical casing;
a frame that is disposed on an inner side portion of the casing;
a display unit that is provided to the frame, and displays at least part of a face of the robot;
an input device that is provided to the frame;
an output device that is provided to the frame;
a communication circuit that is provided to the frame and connected to an external network;
a set of driving wheels that are provided to the frame, the driving wheels coming into contact with an inner circumferential face of the casing and rotating the casing; and
a control circuit that
in a case of responding based on predetermined processing that requires a predetermined amount of time or more as to an input instruction by a user input via the input device, causes the set of driving wheels to rotate in opposite directions from each other to rotate the spherical casing, and
when outputting a response based on the predetermined processing via the output device, stops rotation of the spherical casing with the display unit facing toward the user.

12. The robot according to Claim 11, further comprising:
a camera provided to the frame,
wherein the control circuit
performs imaging using the camera while the spherical casing is rotating, and
recognizes a position of the user based on an image imaged by the camera and stops rotation of the spherical casing with the display unit facing the position of the user that has been recognized, by the time that a response based on results of the predetermined processing is output via the output device.

13. The robot according to either Claim 11 or 12,
wherein, after rotation of the spherical casing has been stopped, the control circuit outputs a response based on the results of the predetermined processing via the output device, in a state with the display unit facing the position of the user that has been recognized.

14. The robot according to Claim 11,
wherein the predetermined processing is made up of two or more procedures,
and wherein the control circuit controls the rotation speed of the set of driving wheels to reduce the speed of the spherical causing rotating, each time each of the two or more procedures ends.

15. The robot according to Claim 11, further comprising:
a camera provided to the frame,
wherein the predetermined processing is image recognition processing performed at an external server connected via the external network.

16. The robot according to Claim 15,
wherein, in the image recognition processing, the control circuit
uses the camera to cause an object to be recognized to be imaged,
uses the communication circuit to cause an image of the object to be recognized, which has been imaged, to be transmitted to the external server via the external network,
uses the communication circuit to cause recognition results of the image of the object to be recognized from the external server to be received, and
causes the received recognition results to be output via the output device.

17. A robot, comprising:
a spherical casing;
a frame that is disposed on an inner side portion of the casing;
a display unit that is provided to the frame, and displays at least part of a face of the robot;
a camera provided to the frame;
an input device that is provided to the frame;
an output device that is provided to the frame;
a communication circuit that is provided to the frame and connected to an external network;
a set of driving wheels that are provided to the frame, the driving wheels coming into contact with an inner circumferential face of the casing and rotating the casing; and
a control circuit that, in a case of determining that image recognition is necessary regarding a speech instruction by a user input via the input device, uses the camera to cause an object to be recognized to be imaged, causes an image of the object to be recognized that has been imaged, to be transmitted to an external server via the external network, causes recognition results of the image of the object to be recognized to be received from the external server, and causes the received recognition results to be output via the output device,
wherein, in a case where recognition results of the image of the object to be recognized by the external server are necessary, the control circuit causes the set of driving wheels to rotate in opposite directions from each other to rotate the spherical casing, and upon receiving the recognition results of the image of the object to be recognized from the external server, stops rotation of the spherical casing with the display unit facing toward the user.

18. The robot according to Claim 17,
wherein the control circuit
performs imaging using the camera while the spherical casing is rotating, and
recognizes a position of the user based on an image imaged by the camera and stops rotation of the spherical casing with the display unit facing the position of the user that has been recognized, by the time that a response based on recognition results is output via the speaker.

19. The robot according to Claim 17, further comprising:
memory that stores reference data for image recognition,
wherein, in a case where judgement is made that recognition results of the image of the object to be recognized by the external server are not necessary for responding to the speech instruction by the user, and that the response can be made by image recognition of the object to be recognized based on the reference data for image recognition stored in the memory, the control circuit causes recognition results based on the reference data to be output via the speaker, without performing control to rotate the spherical casing by rotation of the set of driving wheels.

20. The robot according to any one of Claims 17 through 19,
wherein, after rotation of the spherical casing has been stopped, the control circuit outputs a response based on the results of the predetermined processing via the output device, in a state with the display unit facing the position of the user that has been recognized.

21. The robot according to any one of Claims 17 through 19,
wherein the image recognition processing is made up of two or more procedures,
and wherein the control circuit controls the rotation speed of the set of driving wheels to reduce the speed of the spherical causing rotating, each time each of the two or more procedures ends.
